# EUROPEAN PATENT SPECIFICATION

(11) **EP 3 269 243 B1**
(45) Date of publication and mention of the grant of the patent: **01.01.2020**
(21) Application number: 15885277.2
(22) Date of filing: 27.11.2015
(51) Int. Cl.: A01N 25/10, A01N 25/08, A01N 25/30, A01N 25/04

(54) **PREPARATION METHOD FOR PESTICIDE NANO SOLID DISPERSION**
HERSTELLUNGSVERFAHREN FÜR PESTIZID-NANOFESTSTOFFDISPERSION
PROCÉDÉ DE PRÉPARATION POUR NANO DISPERSION SOLIDE DE PESTICIDE

(30) Priority: 13.03.2015 CN 201510109887
(43) Date of publication of application: 17.01.2018
(73) Proprietor: Institute of Environment and Sustainable Development in Agriculture Chinese Academy of Agricultural Sciences, Beijing 100081 (CN)
(72) Inventor: CUI, Haixin, Beijing 100081 (CN); CUI, Bo, Beijing 100081 (CN); FENG, Lei, Beijing 100081 (CN); LIU, Guoqiang, Beijing 100081 (CN)
(74) Representative: Sun, Yiming
(86) International application number: PCT/CN2015/095771
(87) International publication number: WO 2016/145908

(56) References cited:
- CN-A- 101 258 848
- CN-A- 101 390 521
- CN-A- 102 499 236
- CN-A- 102 805 080
- CN-A- 103 299 994
- CN-A- 104 082 287
- US-A1- 2010 260 691
- US-A1- 2013 196 852
- US-A1- 2014 212 466

## Description

### FIELD OF THE INVENTION

The present invention belongs to the technical field of pesticides. The present invention relates to a preparation method for a pesticide solid nanodispersion.

### BACKGROUND OF THE INVENTION

Pesticide is an important material foundation for defending against major biological disaster, ensuring food security, and promoting the sustainable and stable growth of agricultural products. According to the UN Food and Agriculture Organization (FAO), the loss of agricultural products retrieved by the use of pesticides to control agricultural pests accounts for about 30% of the total agricultural output across the world. Except for a few species, pesticide TC generally cannot be applied directly. According to the characteristics of the pesticide TC and specific requirements for its use, it must be used in conjunction with one or more pesticide adjuvants, and be processed or prepared into a specific form, which is a pesticide formulation.

Currently, the proportion of high-efficient and environment-friendly pesticides produced and used in China is not high. The traditional formulations such as EC and WP are still the main forms. They have some limitations like extensive use of organic solvents, dust drift, poor dispersion and stability, which make these forms of pesticide having generally low effective utilization. The use of co-solvents, reduction in the particle size, change of the crystalline forms, solubilization by surfactants and loading the pesticide into a water-soluble carrier, are the common methods for improving the effective utilization and bioavailability of pesticides.

The rapid development of nanotechnology provides new theories and technical methods for the modern agricultural science. The formulation processing, transformation and innovation of the original pesticide with nanomaterials and nanotechnology allows a large number of new and high-efficient forms to appear.

Microemulsion is one of water-based pesticide formulations and one of new formulations to replace EC and reduce the contamination of organic solvents. Chinese Patent Application No. CN 1656893A discloses a process for producing microemulsion. Microemulsion is a thermodynamically stable dispersion system composed of a liquid pesticide, surfactants, water and stabilizers. Its characteristic consists in using water as medium and containing no or less organic solvent, thus it is not inflammable and explosive. Therefore, it can be safely produced, operated, stored and transported, decrease environmental pollution and save a lot of organic solvent. In addition, pesticide has an extremely high degree of dispersion in water, a general particle size of 10-100 nm and an appearance of nearly transparent or slightly transparent. This formulation has excellent solubility, transfer efficiency, wettability and permeability, which can lead to higher bioavailability. Nevertheless, there are some disadvantages and limitations in microemulsion. The common problems are instability, easy to crystallize and precipitate, narrow transparent temperature zone, and low drug loading. Furthermore, the stability of formulation is susceptible to the interference of the external environment, thus security risks exist in storage and transportation process. Especially in order to maintain its stability and dispersibility, a large amount of surfactants are needed, usually 3-4 times higher than the pesticide content. A large-scale use of various surfactants and adjuvants also leads to new environmental and food safety issues, which make its application in the protection of fresh fruits and vegetables to be greatly limited.

Chinese Patent Application No. CN 102499236A discloses a solid microemulsion containing pyrethroid insecticides and its preparation. This method consists in mixing the TC with surfactants and/or organic solvents to form an oil phase, and then mixing with a carrier solid phase and/or water, to form a solid-oil or water-solid-oil mixture. The solid microemulsion can be dispersed in water into a colorless, transparent or translucent microemulsion, which is like the emulsion obtained by diluting the conventional microemulsion with water. It retains advantages of the conventional microemulsion while overcomes the defects of liquid formulation such as vulnerable to environmental interference and inconvenient long-term storage and transportation.

However, it still cannot solve environmental pollution and food safety problems caused by extensive use of surfactants.

Nanosuspension is another new type of water-based pesticide formulations. It is a submicron colloidal dispersion system, which is formed by dispersing a "pure" pesticide active ingredient in water through the stabilizing action of the surfactant. The active ingredient in this pesticide formulation has small particle size and large specific surface area, causing a faster dissolution rate of drug and enhanced target adhesion. These properties can improve the effective utilization of pesticide.

Thus, US 2014/212466 A1 discloses a method for the preparation of a carrier liquid which comprises the steps of: (I) preparing a single phase solution comprising: (a) a solvent or a mixture of miscible solvents, (b) a liquid carrier material, which is soluble in solvent (a), and (c) a dopant material which is also soluble in solvent (a); (II) cooling (preferably freezing) the single phase solution produced in step (I) to a temperature at which at least both the solvent (a) and carrier material (b) become solid; and (III) removing solid solvent (a) from the cooled (frozen) single phase solution in vapour form, such that the remaining cooled (frozen) carrier material (b) and dopant material (c) are returned to ambient temperature thus providing a product of liquid carrier material (b) having dopant material (c) dispersed therein. The water-insoluble dopant may be in the form of nano-particles.

US 2013/196852 A1 discloses a method for preparing an improved composition comprising at least one active agent and at least one solid carrier material, wherein the active agent is dispersed through the carrier material in nano-disperse form, which method comprises the steps of: (a) forming a liquid mixture comprising the active agent, the carrier material, a stabilizing agent, a first solvent for the active agent and the stabilizing agent and, a second solvent for the carrier material, and (b) drying the liquid mixture to remove the first and second solvents to obtain a substantially solvent-free nano-dispersion of the active agent with the stabilising agent in the carrier material, wherein the stabilizing agent is capable of stabilizing the active agent in the liquid mixture during drying and in a resultant liquid nano-dispersion of the improved composition.

US 2010/260691 A1 discloses an aqueous composition containing a hydrophobic material, and, more particularly, a water-soluble matrix of a water soluble polymer and a water soluble surfactant, in the form of a complex, for stabilizing the hydrophobic material, as a nanoparticulate dispersion or emulsion as well as a delivery system for delivering bioactive hydrophobic materials as an aqueous nanoparticle dispersion of a water-soluble matrix of polymer and a surfactant.

CN 102 499 236 A discloses a solid microemulsion comprising pyrethroid pesticide and a preparation method of the solid microemulsion. The solid microemulsion comprises the following components by weight percent: 3-40% of active pharmaceutical ingredients of the pyrethroid pesticide, 3-20% of surfactant, 0-10% of organic solvent, 0-6% of disintegrant, 0-3% of binder and the balance of carrier. The invention further discloses a preparation method of the solid microemulsion comprising the pyrethroid pesticide. The biological activity of active ingredients of the solid microemulsion disclosed by the invention can be fully exerted, and the shelf life of the product can be prolonged. In addition, because the solid microemulsion does not adopt polar organic solvents, aromatic hydrocarbon organic solvents such as xylene and other chemical solvents or adopts a small amount of green vegetable oil ester solvents, the pollution of the chemical solvents to the environment can be avoided.

However, its main drawback is that the liquid formulation has poor stability and needs more stabilizers and suspending agents.

In addition, some progress has made in the study on producing insoluble pesticide into ultra-fine powder formulation at the nanoscale. However, in the process of diluting and dispersing the powder with water, the agglomeration, flocculation and sedimentation of pesticide nanoparticles, resulting from the interaction of electrostatic forces and Van der Waals forces, have not been effectively overcome and solved, making it difficult to play the desired application effect.

Through a long period of exploration and research, based on existing technology, the present invention creates a solid formulation, which makes a poorly water- soluble pesticide highly disperse in carriers and surfactants in the form of solid nanoparticles, and a preparation method for the same. It can eliminate the use of organic solvents and significantly reduce the use of surfactants and additives. It can play many advantages of pesticide nanoformulations, but also overcome the main limitations of the prior formulations. As a solid formulation, it has less environmental impacts, significantly improved stability and shelf life, and convenience for packaging, storage and transportation. After being diluted with watered directly, the formulation may form a water-based nanodispersion system having excellent overall performance. After crop spraying, it is beneficial to improve the dispersibility and dissolution rate of the poorly water-soluble drug, to increase drug's foliar adherence and penetration, so as to improve the bioavailability, reduce pesticide usage and residual contamination.

### DETAILED DESCRIPTION OF THE INVENTION

### [Technical Question to Be Solved]

The object of the present invention is to provide a preparation method for a pesticide solid nanodispersion.

### [Technical Plan]

The present invention is achieved by the following technical plan.

The present invention relates to a method of preparation of a pesticide solid nanodispersion, characterized in that it is formed by uniformly dispersing poorly water-soluble pesticide nanoparticles in surfactants and water-soluble carriers, and it has the composition in parts by weight as follows:

| | |
|---|---|
| pesticide | 0.001-90 ; |
| surfactants | 0.001-50 ; |
| water-soluble carriers | 5-99.9 ; |

wherein,
the said pesticide is one or more pesticide(s) selected from poorly water-soluble insecticides, fungicides, herbicides or plant growth regulators;
the average particle size of the said pesticide nanoparticles is 1-1000 nm, preferably less than 500 nm, more preferably less than 100 nm.

Poor water-solubility of the insecticides, fungicides, herbicides or plant growth regulators is to be understood as their solubility in water less than or equal to 0.1g/L.

Said insecticide should be understood as a drug for controlling agricultural pests encountered in the application of the products of the present invention. As it is well known, almost all the insecticides will have impact on the ecosystem, most harmful to human beings, others will be concentrated in the food chain. Therefore, a balance must be achieved among the agricultural development, the environment and human beings' health.

The insecticide may be selected from pyrethrins, carbamates, organophosphorus, organic sulfur, organic choline, nereistoxin, neonicotine, phenyl ureide, abamectin, pyridaben, acequinocyl, phenylpyrazole, indoxacarb or diafenthiuron;

The insecticide used in the method of the invention may be one currently commercially available in the market.

Said fungicide should be understood as a chemical agent that can effectively control or kill microorganisms encountered in the application of the products produced by the method of the present invention, including bacteria, fungi and algae.

The said fungicide may be selected from aniline pyridine, antibiotics, aromatic hydrocarbons, dinitroaniline, allylamine, benzsulfamide, benzimidazole, benzisothiazole, benzophenone, benzopyrimidine, benzotriazine, benzyl carbamate, carbamate, carboxamide, carboxylic acid diamide, chloronitrile, cyanoimidazole, cyclopropanecarboxamide, ethylaminothiazole carboxamide, imidazole, hydroxyanilide, imidazolidinone, isobenzofuranone, methoxyacrylate, methoxy carbamate, morpholine, N-phenylcarbamate, oxazolidinedione, phenyl acetamide, phenylamide, phenylpyrrole, phenylurea, thiophosphates, phthalamic acid, phthalimide, piperazine, piperidine, propionamide, pyridine, pyridylmethyl amide, toluamide, triazines or triazoles;

The fungicide used in the method of the invention may be one currently commercially available in the market.

Said herbicide should be understood as an agent that can cause weed completely or selectively dead, so as to eliminate or inhibit plant growth.

Said herbicide may be selected from amides, aryloxyphenoxy propionate, phenoxy carboxylic acids, organophosphorus, benzamide, benzofuran, benzoic acid, benzothiadiazinone, carbamate, chloroacetamide, pyridine carboxylic acid, chlorocarboxylic acid, cyclohexanedione, dinitroanilines, diphenyl ether, isoxazole, oxazolidinone, N-phenyl phthalimide, oxadiazole, oxazolidinedione, oxyacetamide, phenylcarbamate, phenyl pyridazine, sulfonaminocarboxyl triazolinone, sulfonyl triazolo carboxamide, triazolopyrimidine, triones, uracil or ureas herbicides;
The herbicide used in the method of the invention may be one currently commercially available in the market.

The plant growth regulator should be understood as a chemical agent that can regulate the growth and development of plants.

According to the present invention, the said plant growth regulator is selected from maleic hydrazide, methyl naphthacetate, 6-benzylaminopurine, brassinolide, aminoethoxyvinylglycine or paclobutrazol plant growth regulators.

The plant growth regulator used in the method of the present invention may be one currently commercially available in the market.

Said surfactant should be understood as a substance that can make the interface property of the solution system change significantly. The surfactant molecule has an amphiphilic structure in which one end is a hydrophilic group and the other end is a hydrophobic group. The hydrophilic group is usually a polar group, such as carboxyl, sulfonic group, amino, hydroxyl, amido group and the like. The hydrophobic group is usually a non-polar hydrocarbon chain. The said surfactant is one or more surfactant(s) selected from cationic surfactants, anionic surfactants, nonionic surfactants or amphoteric surfactants.

Said cationic surfactant may be selected from aliphatic amine salts, ethanolamine salts, polyethylene polyamine salts or quaternary ammonium salts;
The said anionic surfactant may be selected from sodium dodecyl sulfonate, sodium lauryl sulfate, sodium dodecylbenzenesulfonate, maleic rosin-polyoxypropylene-polyoxyethylene ether sulfonate, alkyl phenol polyoxyethylene ether phosphate salts, monododecyl ether phosphate salt, didodecyl ether phosphate salt, octyl ether phosphate, aliphatic alcohol polyoxyethylene phosphatidates, aliphatic alcohol polyoxyethylene ether carboxylates, polycarboxylates or lignosulfonates.

The said nonionic surfactant may be selected from alkylphenol polyoxyethylene ether formaldehyde condensates, styrylphenol polyoxyethylene ether formaldehyde condensate, polystyrene phenol polyoxyethylene ether, cumenyl phenol polyoxyethylene ether formaldehyde condensate, benzylphenol polyoxyethylene ether formaldehyde condensate, polyoxyethylene castor oil, polyvinyl pyrrolidone, Tween, sorbitan oleate, polyoxyethylene-polyoxypropylene block copolymers or sucrose monooleate.

The said amphoteric surfactant may be selected from dodecylhydroxypropyl sulfobetaine, lauryl betaine, octadecyl dihydroxyethyl amine oxide, octadecyl urea or oleyl biuret.

The cationic surfactant, anionic surfactant, nonionic surfactant or amphoteric surfactant used in the method of the present invention may be one currently commercially available in the market.

Said water-soluble carrier may be selected from urea, sodium sulfate, magnesium sulfate, sodium benzoate, sucrose, lactose, soluble starch, hydroxypropyl methyl cellulose, hydroxyethyl cellulose, sodium carboxymethyl cellulose, hydroxyethyl-p-cyclodextrin, hydroxypropyl-p-cyclodextrin, sulfo-p-cyclodextrin, polyvinyl alcohol, polyethylene glycol, xanthan gum, magnesium aluminum silicate, acacia, sodium acrylate or polyvinylpyrrolidone.

The formulations of the said pesticide solid nanodispersion may be powders, tablets granules or microcapsules.

The said powders, tablets, granules and microcapsules may be prepared in accordance with the composition of the pesticide solid nanodispersion described herein using the corresponding conventional methods.

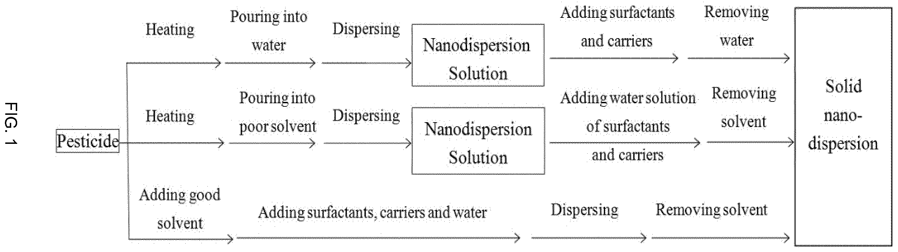

The present invention relates to a method for preparing the pesticide solid nanodispersion. The detailed preparation process is shown in FIG. 1.

In the present invention, the term "nanodispersion solution" and "solid nanodispersion" refers to the dispersion solution or dispersion containing pesticide particles having an average particle diameter less than 1µm, preferably less than 500 nm, more preferably less than 100 nm.

One method of the present invention consists in firstly obtaining the dispersion solution with suitable concentration of nanoparticles. In the dispersion solution, the poorly water-soluble solid pesticide is dispersed as nano-sized particles in the solution. Features of the drug-loaded particles including small size and large specific surface area, as well as functional modification to their surfaces by hydrophilic groups in the adjuvant components, significantly improve the solubility, dispersibility and stability of poorly water-soluble drugs in the solution, so as to ensure the solid nanodispersion to maintain its good dispersion, suspension and drug concentration uniformity in the process of diluting with water and spraying.

For pesticides with melting point below 100°C, water can be the solvent for preparing the solid nanodispersion. For pesticides with melting point above 100°C, the poor solvent of TC may be selected to prepare the solid nanodispersion.

For pesticides with melting point below 100°C, the steps of preparing the said pesticide solid nanodispersion are as follows:

### A. Preparing the nanodispersion solution

Heating 0.001 to 90 parts by weight of the pesticide to the temperature above its melting point while below its decomposition and denaturation temperature. Subsequently, pouring the said pesticide into the water and uniformly dispersing the said pesticide in water using a high-speed shear emulsifying machine or a high-pressure homogenizer. Then cooling it to room temperature to obtain the dispersion solution of the pesticide solid nanoparticles.

The pesticide has been previously described; no more repetition here.

In this step, through a method of dispersing molten TC, pesticide is dispersed into nanoparticles in its liquid state. On the one hand, this method can reduce the hardness of the material when sheering or homogenizing, reduce energy consumption, and prevent equipment from wearing; on the other hand, it can improve uniformity of dispersion and reduce the particle size to the most extent after being dispersed.

The subsequent cooling operation aims to transform the dispersed TC droplets rapidly into solid state to reduce the solution viscosity and the interaction between pesticides. It can stabilize the pesticide particles at the nanoscale in a short time.

The particle size and uniformity of the dispersion solution with pesticide solid nanoparticles obtained in this step will have a great impact on the particle size and solubility of the final solid nanodispersion. As a result, the particle size and polydispersity index of nanoparticle dispersion solution obtained in this step should be as small as possible.

The high-speed shear emulsifying machine used in the present invention is currently commercially available in the market, such as the product sold by ATS under the trade name C25, with shearing speed of 1000-30000 rpm. The high-pressure homogenizer used in the present invention is currently commercially available in the market, such as the product sold by ATS under the trade name AH-100D, with pressure of 50-1500 bar. The mixer used in the present invention is currently commercially available in the market, such as the product sold by Guohua Instrument Co. under the trade name 78-2, with the speed of 50-5000 rpm.

### B. Preparing the solid nanodispersion

Adding 0.001 to 50 parts by weight of surfactants and 5 to 99.9 parts by weight of water-soluble carriers to the dispersion solution of the pesticide solid nanoparticles obtained in step A, stirring, and then removing water by heating, decompression evaporation, vacuum drying or freeze drying, thus obtaining the said pesticide solid nanodispersion.

In this step, some adjuvant ingredients such as surfactants and water-soluble carriers are added into the dispersion solution of solid nanoparticles obtained in step A, to coat the drug particles and modified their surfaces, and then get the pesticide-loaded particles. By electrostatic or steric hindrance effect between pesticide particles, pesticides are prevented from accumulation, flocculation and precipitation, so that the pesticide particles can be stably dispersed in the solution. After solvent being removed, the pesticide-loaded particles are converted into stable solid nanodispersion, while maintaining their nano diameter, the convenience and safety of storage and transportation are also improved.

Heating, decompression evaporation, vacuum drying or freeze drying can be used to remove the water. For example, a drying equipment such as the product sold by Shanghai Yiheng Company under the trade name DHG-9070A can be used for heating. An apparatus such as the rotary evaporator under the trade name EYELA N-2100 can be used for decompression evaporation. An apparatus such as the product sold by Jinghong Co. under the trade name XMTD-8222 can be used for vacuum drying. An apparatus such as the product under the trade name EYELA FD-81 can be used for freeze drying.

Heating, decompression evaporation, vacuum drying or freeze drying is carried out in a conventional manner in accordance with the operation procedures of the equipment specification.

For pesticides with melting point above 100°C, steps of preparing the said pesticide solid nanodispersion are as follows:

### A. Preparing the nanodispersion solution

Heating 0.001 to 90 parts by weight of the pesticide to the temperature above its melting point, subsequently pouring the said pesticide into its poor solvent, then dispersing the said pesticide uniformly in the poor solvent using a high-speed shear emulsifying machine or a high-pressure homogenizer, then cooling it to room temperature to obtain the dispersion solution of the pesticide solid nanoparticles.

The poor solvent of the pesticide should be understood as a solvent in which the solubility of the pesticide is less than or equal to 5%, such as n-hexane, octane, ethylene glycol monomethyl ether, ethylene glycol or hexamethylphosphoric triamide, which are all the products currently commercially available in the market.

The said high-speed shear emulsifying machine has a shearing speed of 1000-30000 rpm. The said high-pressure homogenizer has a pressure of 50-1500 bar. The said mixing speed is 50-5000 rpm. The apparatuses used in this step are those described above, no more repetition is covered here.

### B. Preparing the solid nanodispersion

Adding an aqueous solution containing 0.001 to 50 parts by weight of surfactants and 5 to 99.9 parts by weight of water-soluble carriers into the dispersion solution of the pesticide solid nanoparticles obtained in step A, stirring, and then removing the poor solvent by freeze drying, spray drying, centrifugation and distillation, thus obtaining the said pesticide solid nanodispersion.

Freeze-drying, spray drying, centrifugation and distillation are conventional techniques in the art, and apparatuses involved are currently commercially available in the market.

Since step A and step B of this preparation method are the same as the above described, no more repetition is covered here.

Another preparation method of the present invention consists in dissolving 0.001 to 90 parts by weight of the pesticide in the good solvent of the said pesticide, then adding 0.001 to 50 parts by weight of surfactants, 5 to 99.9 parts by weight of water-soluble carriers and 0 to 50 parts by weight of water, mixing, and then dispersing the said pesticide using a high-speed shear emulsifying machine or a high-pressure homogenizer, followed by distillation, decompression evaporation, spray drying, freeze-drying or drying to remove the solvent, thus obtaining the said pesticide solid nanodispersion. The feature of this preparation is that firstly dissolving the pesticide in its molecular state into the good solvent, in the following process of water addition or solvent removal, reducing the pesticide's solubility, making the pesticide precipitated and coated by surfactants and water-soluble carriers to form stable nanoparticles.

The good solvent for the said pesticide should be understood as a solvent in which the solubility of pesticide is above 5%, such as acetone, ethyl acetate, dichloromethane, ethanol, methanol, which are currently commercially available in the market.

Compared with microemulsion and nanosuspension, the resulting solid preparation of the present invention has such advantages as little environmental impacts, more stable formulation, more convenient package, storage and transportation, as well as longer shelf life. Furthermore, according to the present invention, TC is sheared or homogenized in molten state in the presence of water or solvent to obtain the dispersion solutions of the pesticide solid nanoparticles firstly, then some adjuvant components like surfactants are added. The pesticide thus obtained has smaller particle size, better uniformity and better coating effect of surfactants. By controlling the dispersion temperature of the pesticide in combination with shearing and homogenization processes, the method disclosed in the present invention can control the final pesticide particle size at the nanometer scale and maintain a good dispersibility. This method is suitable for most poorly water-soluble pesticides, such as insecticides, herbicides, fungicides and plant growth regulators. In addition, compared with the existing microemulsion and solid microemulsion technologies, the solid nanodispersion of the present invention contains less than 1% of surfactants, or even less than 0.1%, and maintains good dispersibility and stability as well. Low content of surfactants can significantly save costs, reduce pesticide residue and ensure the security of grain, food and ecology.

Currently, nanoformulations of pesticides are generally produced by grinding. This method has several drawbacks, including large energy consumption and uneven particle size distribution. Besides, dissolution and detachment of the grinding bead and other issues can also pollute the system and affect the final quality of the product. There is no need to use high-energy equipment such as a grinding machine in the preparation method of the present invention. Moreover, the preparation method of the present invention has other advantages of simple, easy control, stable product quality and good reproducibility, which not only improves the production efficiency, but also saves the cost of production.

### [Beneficial Effects]

The beneficial effects of the present invention include:
Compared with the prior art, the pesticide prepared by the method of the present invention has smaller particle size, more uniform dispersibility and better coating effect of surfactants. The content of surfactants in the product of the present invention may be less than 1%, even less than 0.1%, and can maintain good dispersibility and stability as well. The method of the present invention can eliminate the usage of the organic solvent and significantly save production cost. It not only can decrease the usage of pesticides by the way of improving the effective utilization, but also can significantly reduce residues of the pesticide, harmful solvents and additives in the agricultural products and environmental pollution, to ensure security of grain, food and ecology. In the preparation method of the present invention, there is no need to use high-energy equipment such as a grinding machine. Moreover, the method of the present invention has other advantages of simple, easy control, stable product quality and good reproducibility, which not only improves the production efficiency, but also saves the cost of production.

### BRIEF DESCRIPTION OF THE DRAWINGS

FIG. 1 is a process flow diagram of the pesticide solid nanodispersions of the present invention.

### EXAMPLES

The present invention can be better understood by the following examples.

### Example 1: Preparation of the pesticide solid nanodispersion of the present invention

The procedures of the example are as follows:
A. Preparation of a nanodispersion solution
   0.001 parts by weight of lambda-cyhalothrin insecticide was heated to about 10°C above its melting point 49.2°C and poured into water. And then lambda-cyhalothrin was uniformly dispersed in water by shearing for 20 min at the speed of 10000 rpm with a high-speed shear emulsifying machine sold by ATS Co. under the trade name C25, subsequently cooled to room temperature, thus obtaining a dispersion solution of lambda-cyhalothrin solid nanoparticles; and
B. Preparation of solid nanodispersion
   0.099 parts by weight of dodecanesulfonic acid sodium salt surfactant and 99.9 parts by weight of urea were added into the dispersion solution of lambda-cyhalothrin solid nanoparticles obtained in step A. The resulting mixture was stirred at a rotation speed of 1000 rpm, and then heated at 80°C to remove water using a drying equipment sold by Shanghai Yiheng Co. under the trade name DHG-9070A, thus preparing the said solid nanodispersion of lambda-cyhalothrin.

The solid nanodispersion of lambda-cyhalothrin prepared in this example was dispersed in distilled water. It was measured using a laser granularity analyzer sold by Malvern Co. under the trade name Nano ZS90 and its average particle size was 65 nm. Its suspensibility was 99.2%, and wetting time was 25s.

### Example 2: Preparation of the pesticide solid nanodispersion of the present invention

The procedures of the example are as follows:
A. Preparation of a nanodispersion solution
   10 parts by weight of nitenpyram insecticide was heated to about 10°C above its melting point 83°C and poured into water. Then nitenpyram was uniformly dispersed in water by shearing for 20 min at speed of 20000 rpm with a high-speed shear emulsifying machine sold by ATS Co. under the trade name C25, subsequently cooled to room temperature, thus obtaining a dispersion solution of nitenpyram solid nanoparticles; and
B. Preparation of solid nanodispersion
   50 parts by weight of monododecyl ether phosphate salts anionic surfactant and 40 parts by weight of sodium sulphate water-soluble carrier were added into the dispersion solution of nitenpyram solid nanoparticles obtained in step A. The mixture was stirred well at a rotation speed of 1800 rpm, and then vacuum evaporated to remove water under water bath of 40°C and vacuum pressure of 10 mbar using a rotary evaporation equipment sold by BUCHI under the trade name R-210, thus obtaining the said nitenpyram solid nanodispersion.

The nitenpyram solid nanodispersion prepared in this example was dispersed in distilled water. It was measured using a laser granularity analyzer sold by Malvern Co. under the trade name Nano ZS90 and its average particle size was 45 nm. Its suspensibility was 99%, and wetting time was 35s.

### Example 3: Preparation of the pesticide solid nanodispersion of the present invention

The procedures of the example are as follows:
A. Preparation of a nanodispersion solution
   30 parts by weight of spinosad insecticide was heated to about 10°C above its melting point 84°C and poured into water. Then spinosad was uniformly dispersed in water by homogenizing for 20 min under the pressure of 600 bar with a high-pressure homogenizer sold by ATS Co. under the trade name AH-100D, subsequently cooled to room temperature, thus obtaining a dispersion solution of spinosad solid nanoparticles; and
B. Preparation of solid nanodispersion
   0.03 parts by weight of octyl ether phosphate anionic surfactant and 69.97 parts by weight of magnesium sulfate water-soluble carrier were added into the dispersion solution of spinosad solid nanoparticles obtained in step A. The mixture was stirred well at a rotation speed of 1200 rpm, then vacuum dried to remove water at 40°C using an apparatus sold by Jinghong Co. under the trade name XMTD-822, thus obtaining the said spinosad solid nanodispersion.

The spinosad solid nanodispersion prepared in this example was dispersed in distilled water. It was measured using a laser granularity analyzer sold by Malvern Co. under the trade name Nano ZS90 and its average particle size was 210 nm. Its suspensibility was 98%, and wetting time was 40s.

### Example 4: Preparation of the pesticide solid nanodispersion of the present invention

The procedures of the example are as follows:
A. Preparation of a nanodispersion solution
   25 parts by weight of trifluralin herbicide was heated to about 10°C above its melting point 49°C and poured into water. Then trifluralin was uniformly dispersed in water by shearing for 12 min at shearing speed of 6000 rpm with a high-speed shear emulsifying machine sold by ATS Co. under the trade name C25, subsequently cooled to room temperature, thus obtaining a dispersion solution of trifluralin solid nanoparticles; and
B. Preparation of solid nanodispersion
   17 parts by weight of polystyrene phenol polyoxyethylene ether nonionic surfactant and 58 parts by weight of urea water-soluble carrier were added into the dispersion solution of trifluralin solid nanoparticles obtained in step A. The resulting mixture was stirred well at a rotation speed of 5000 rpm, and then freeze-dried under the condition of 10 pa to remove water using an equipment sold by EYELA Co. under the trade name FD-81, thus preparing the said trifluralin solid nanodispersion.

The trifluralin solid nanodispersion prepared in this example was dispersed in distilled water. It was measured using a laser granularity analyzer sold by Malvern Co. under the trade name Nano ZS90 and its average particle size was 256 nm. Its suspensibility was 98%, and wetting time was 47s.

### Example 5: Preparation of the pesticide solid nanodispersion of the present invention

The procedures of the example are as follows:
A. Preparation of a nanodispersion solution
   18 parts by weight of propamocarb hydrochloride fungicide was heated to about 10°C above its melting point 55°C and poured into water. Then propamocarb hydrochloride was uniformly dispersed in water by homogenizing for 10 min under the pressure of 800 bar with a high-pressure homogenizer sold by ATS Co. under the trade name AH-100D, subsequently cooled to room temperature, thus obtaining a dispersion solution of propamocarb hydrochloride solid nanoparticles; and
B. Preparation of solid nanodispersion
   12 parts by weight of cumenyl phenol polyoxyethylene ether formaldehyde condensate nonionic surfactant, 64 parts by weight of the mixture of urea and sodium sulphate (weight ratio of 1:1) and 6 parts by weight of the mixture of polyethylene glycol and xanthan gum (weight ratio of 1:2) were added into the dispersion solution of propamocarb hydrochloride solid nanoparticles obtained in step A. The resulting mixture was stirred well at a rotation speed of 1000 rpm, and then heated at 60°C to remove water using a drying equipment sold by Shanghai Yiheng Co. under the trade name DHG-9070A, thus preparing the said solid nanodispersion of propamocarb hydrochloride.

The solid nanodispersion of propamocarb hydrochloride prepared in this example was dispersed in distilled water. It was measured using a laser granularity analyzer sold by Malvern Co. under the trade name Nano ZS90 and its average particle size was 324 nm. Its suspensibility was 99%, and wetting time was 42s.

### Example 6: Preparation of the pesticide solid nanodispersion of the present invention

The procedures of the example are as follows:
A. Preparation of a nanodispersion solution
   5.9 parts by weight of triflumizole fungicide was heated to about 10°C above its melting point 63.5°C and poured into water. Then triflumizole was uniformly dispersed in water by shearing for 18 min at shearing speed of 10000 rpm with a high-speed shear emulsifying machine sold by ATS Co. under the trade name C25, subsequently cooled to room temperature, thus obtaining a dispersion solution of triflumizole solid nanoparticles; and
B. Preparation of solid nanodispersion
   0.001 parts by weight of benzylphenol polyoxyethylene ether formaldehyde condensates nonionic surfactant, 70 parts by weight of the mixture of sodium sulphate and magnesium sulphate (weight ratio of 2:3) and 24.099 parts by weight of the mixture of polyethylene glycol and magnesium aluminum silicate (weight ratio of 3:1) water-soluble carriers were added into the dispersion solution of triflumizole solid nanoparticles obtained in step A. The resulting mixture was stirred well at a rotation speed of 3000 rpm, and then vacuum evaporated under water bath of 35°C and the pressure of 12 mbar to remove water using an apparatus sold by BUCHI Co. under the trade name R-210, thus preparing the said triflumizole solid nanodispersion.

The triflumizole solid nanodispersion prepared in this example was dispersed in distilled water. It was measured using a laser granularity analyzer sold by Malvern Co. under the trade name Nano ZS90 and its average particle size was 67 nm. Its suspensibility was 99.4%, and wetting time was 31s.

### Example 7: Preparation of the pesticide solid nanodispersion of the present invention

The procedures of the example are as follows:
A. Preparation of a nanodispersion solution
   90.0 parts by weight of alachlor herbicide was heated to about 10°C above its melting point 41.5°C and poured into water. Then alachlor was uniformly dispersed in water by homogenizing for 12 min under the pressure of 800 bar with a high-pressure homogenizer sold by ATS Co. under the trade name AH-100D, subsequently cooled to room temperature, thus obtaining a dispersion solution of alachlor solid nanoparticles; and
B. Preparation of solid nanodispersion
   5.0 parts by weight of dodecylhydroxypropyl sulfobetaine amphoteric surfactant and 5.0 parts by weight of urea water-soluble carrier were added into the dispersion solution of alachlor solid nanoparticles obtained in step A. The mixture was stirred well at a rotation speed of 2000 rpm, then vacuum dried to remove water at 40°C using an apparatus sold by Jinghong Co. under the trade name XMTD-822, thus obtaining the said alachlor solid nanodispersion.

The alachlor solid nanodispersion prepared in this example was dispersed in distilled water. It was measured using a laser granularity analyzer sold by Malvern Co. under the trade name Nano ZS90 and its average particle size was 263nm. Its suspensibility was 98.7%, and wetting time was 37s.

### Example 8: Preparation of the pesticide solid nanodispersion of the present invention

The procedures of the example are as follows:
A. Preparation of a nanodispersion solution
   20.0 parts by weight of n-triacontanol plant growth regulator was heated to about 5°C above its melting point 87°C and poured into water. Then n-triacontanol was uniformly dispersed in water by shearing for 15 min at shearing speed of 18000 rpm with a high-speed shear emulsifying machine sold by ATS Co. under the trade name C25, subsequently cooled to room temperature, thus obtaining a dispersion solution of n-triacontanol solid nanoparticles; and
B. Preparation of solid nanodispersion
   8.0 parts by weight of lauryl betaine and 72 parts by weight of sodium sulphate water-soluble carrier were added into the dispersion solution of n-triacontanol solid nanoparticles obtained in step A. The resulting mixture was stirred well at a rotation speed of 2600 rpm, and then freeze-dried under the condition of 10 pa to remove water using an apparatus sold by EYELA Co. under the trade name FD-81, thus preparing the said n-triacontanol solid nanodispersion.

The n-triacontanol solid nanodispersion prepared in this example was dispersed in distilled water. It was measured using a laser granularity analyzer sold by Malvern Co. under the trade name Nano ZS90 and its average particle size was 430 nm. Its suspensibility was 98%, and wetting time was 42s.

### Example 9: Preparation of the pesticide solid nanodispersion of the present invention

The procedures of the example are as follows:
A. Preparation of a nanodispersion solution
   0.001 parts by weight of deltamethrin insecticide was heated to about 5°C above its melting point 101°C and poured into ethylene glycol solvent. Then deltamethrin was uniformly dispersed in ethylene glycol by shearing for 18 min at shearing speed of 25000 rpm with a high-speed shear emulsifying machine sold by ATS Co. under the trade name C25, subsequently cooled to room temperature, thus obtaining a dispersion solution of deltamethrin solid nanoparticles; and
B. Preparation of solid nanodispersion
   50.0 parts by weight of didodecyl ether phosphate salt anionic surfactant and 49.999 parts by weight of sucrose aqueous solution were added into the dispersion solution of deltamethrin solid nanoparticles obtained in step A. The resulting mixture was stirred well at a rotation speed of 1100 rpm, and then freeze-dried under the condition of 5 pa to remove the solvent using an apparatus sold by EYELA Co. under the trade name FD-81, thus preparing the said deltamethrin solid nanodispersion.

The deltamethrin solid nanodispersion prepared in this example was dispersed in distilled water. It was measured using a laser granularity analyzer sold by Malvern Co. under the trade name Nano ZS90 and its average particle size was 85 nm. Its suspensibility was 99%, and wetting time was 42s.

### Example 10: Preparation of the pesticide solid nanodispersion of the present invention

The procedures of the example are as follows:
A. Preparation of a nanodispersion solution
   29.0 parts by weight of buprofezin insecticide was heated to its melting point 105°C and poured into dimethylformamide. Then buprofezin was uniformly dispersed in dimethylformamide by shearing for 14 min at shearing speed of 16000 rpm with a high-speed shear emulsifying machine sold by ATS Co. under the trade name C25, subsequently cooled to room temperature, thus obtaining a dispersion solution of buprofezin solid nanoparticles; and
B. Preparation of solid nanodispersion
   An aqueous solution containing 10 parts by weight of octyl ether phosphate anionic surfactant, 10 parts by weight of octadecyl dihydroxyethyl amine oxide amphoteric surfactant and 51 parts by weight of lactose water-soluble carrier was added into the dispersion solution of buprofezin solid nanoparticles obtained in step A. The resulting mixture was stirred well at a rotation speed of 2200 rpm, and then freeze-dried under the condition of 5 Pa to remove the solvent using an apparatus sold by EYELA Co. under the trade name FD-81, thus preparing the said buprofezin solid nanodispersion.

The buprofezin solid nanodispersion prepared in this example was dispersed in distilled water. It was measured using a laser granularity analyzer sold by Malvern Co. under the trade name Nano ZS90 and its average particle size was 342 nm. Its suspensibility was 97.5%, and wetting time was 48s.

### Example 11: Preparation of the pesticide solid nanodispersion of the present invention

The procedures of the example are as follows:
A. Preparation of a nanodispersion solution
   90.0 parts by weight of bitertanol fungicide was heated to about 5°C above its melting point 125°C and poured into dimethylformamide. Then bitertanol was uniformly dispersed in dimethylformamide by homogenizing for 18 min under the pressure of 800 bar with a high-pressure homogenizer sold by ATS Co. under the trade name AH-100D, subsequently cooled to room temperature, thus obtaining a dispersion solution of bitertanol solid nanoparticles; and
B. Preparation of solid nanodispersion
   An aqueous solution containing 0.001 parts by weight of aliphatic alcohol polyoxyethylene phosphatidates anionic surfactant and 9.999 parts by weight of hydroxypropyl methylcellulose water-soluble carrier were added into the dispersion solution of bitertanol solid nanoparticles obtained in step A. The mixture was stirred well at a rotation speed of 2200 rpm, and then vacuum dried to remove the solvent at 40°C using an apparatus sold by Jinghong Co. under the trade name XMTD-822, thus obtaining the said bitertanol solid nanodispersion.

The bitertanol solid nanodispersion prepared in this example was dispersed in distilled water. It was measured using a laser granularity analyzer sold by Malvern Co. under the trade name Nano ZS90 and its average particle size was 560 nm. Its suspensibility was 96.5%, and wetting time was 50s.

### Example 12: Preparation of the pesticide solid nanodispersion of the present invention

The procedures of the example are as follows:
A. Preparation of a nanodispersion solution
   50.0 parts by weight of simeconazole fungicide was heated to about 5°C above its melting point 118.5°C and poured into ethylene glycol. Then simeconazole was uniformly dispersed in ethylene glycol by shearing for 14 min at shearing speed of 16000 rpm with a high-speed shear emulsifying machine sold by ATS Co. under the trade name C25, subsequently cooled to room temperature, thus obtaining a dispersion solution of simeconazole solid nanoparticles; and
B. Preparation of solid nanodispersion
   An aqueous solution containing 45.0 parts by weight of polyvinylpyrrolidone nonionic surfactant and 5.0 parts by weight of hydroxyethyl cellulose water-soluble carrier were added into the dispersion solution of simeconazole solid nanoparticles obtained in step A. The mixture was stirred well at a rotation speed of 3500 rpm, and then freeze-dried under the condition of 5 Pa to remove the solvent using an apparatus sold by EYELA Co. under the trade name FD-81, thus preparing the said simeconazole solid nanodispersion.

The simeconazole solid nanodispersion prepared in this example was dispersed in distilled water. It was measured using a laser granularity analyzer sold by Malvern Co. under the trade name Nano ZS90 and its average particle size was 350 nm. Its suspensibility was 98%, and wetting time was 33s.

### Example 13: Preparation of the pesticide solid nanodispersion of the present invention

The procedures of the example are as follows:
A. Preparation of a nanodispersion solution
   0.05 parts by weight of pyrazosulfuron-ethyl herbicide was heated to its melting point 178°C and poured into ethylene glycol. Then pyrazosulfuron-ethyl was uniformly dispersed in ethylene glycol by homogenizing for 10 min under the pressure of 1200 bar with a high-pressure homogenizer sold by ATS Co. under the trade name AH-100D, subsequently cooled to room temperature, thus obtaining a dispersion solution of pyrazosulfuron-ethyl solid nanoparticles; and
B. Preparation of solid nanodispersion
   An aqueous solution containing 0.05 parts by weight of Tween 80 nonionic surfactant, 49.9 parts by weight of sodium carboxymethyl cellulose and 50 parts by weight of the mixture of polyethylene glycol and xanthan gum (weight ratio of 1:2) were added into the dispersion solution of pyrazosulfuron-ethyl solid nanoparticles obtained in step A. The mixture was stirred well at a rotation speed of 3200 rpm, and then freeze-dried under the condition of 5 Pa to remove the solvent using an apparatus sold by EYELA Co. under the trade name FD-81, thus preparing the said solid nanodispersion of pyrazosulfuron-ethyl.

The solid nanodispersion of pyrazosulfuron-ethyl prepared in this example was dispersed in distilled water. It was measured using a laser granularity analyzer sold by Malvern Co. under the trade name Nano ZS90 and its average particle size was 482 nm. Its suspensibility was 98%, and wetting time was 35s.

### Example 14: Preparation of the pesticide solid nanodispersion of the present invention

The procedures of the example are as follows:
A. Preparation of a nanodispersion solution
   17.0 parts by weight of daminozide plant growth regulator was heated to about 5°C above its melting point 157°C and poured into ethylene glycol. Then daminozide was uniformly dispersed in ethylene glycol by shearing for 15 min at shearing speed of 15000 rpm with a high-speed shear emulsifying machine sold by ATS Co. under the trade name C25, subsequently cooled to room temperature, thus obtaining a dispersion solution of daminozide solid nanoparticle; and
B. Preparation of solid nanodispersion
   An aqueous solution containing 8.0 parts by weight of sorbitan oleate nonionic surfactant, 70 parts by weight of hydroxyethyl-β-cyclodextrin and 5 parts by weight of the mixture of polyethylene glycol and magnesium aluminum silicate (weight ratio of 3:1) were added into the dispersion solution of daminozide solid nanoparticles obtained in step A. The mixture was stirred well at a rotation speed of 1800 rpm, and then freeze-dried under the condition of 5 Pa to remove the solvent using an apparatus sold by EYELA Co. under the trade name FD-81, thus preparing the said daminozide solid nanodispersion.

The daminozide solid nanodispersion prepared in this example was dispersed in distilled water. It was measured using a laser granularity analyzer sold by Malvern Co. under the trade name Nano ZS90 and its average particle size was 490 nm. Its suspensibility was 98.5%, and wetting time was 40s.

### Example 15: Preparation of the pesticide solid nanodispersion of the present invention

The procedures of the example are as follows:
25 parts by weight of avermectin insecticide was dissolved in acetone. Subsequently, an aqueous solution of 25 parts by weight of aliphatic alcohol polyoxyethylene ether carboxylate anionic surfactant and 50 parts by weight of lactose water-soluble carrier was added into the resulting solution. The mixture thus obtained was mixed well and then sheared for 12 min at shearing speed of 18000 rpm with a high-speed shear emulsifying machine sold by ATS Co. under the trade name C25, then removed the solvent at 45°C using a rotary evaporation equipment sold by EYELA Co. under the trade name N-2100, thus obtaining an avermectin solid nanodispersion.

The avermectin solid nanodispersion prepared in this example was dispersed in distilled water. It was measured using a laser granularity analyzer sold by Malvern Co. under the trade name Nano ZS90 and its average particle size was 95 nm. Its suspensibility was 99%, and wetting time was 25s.

### Example 16: Preparation of the pesticide solid nanodispersion of the present invention

The procedures of the example are as follows:
45 parts by weight of emamectin benzoate insecticide was dissolved in ethyl acetate. Subsequently, an aqueous solution of 25 parts by weight of maleic rosin-polyoxypropylene-polyoxyethylene ether sulfonate, 15 parts by weight of sodium dodecylbenzenesulfonate anionic surfactants and 15 parts by weight of urea water-soluble carrier was added into the resulting solution. The mixture thus obtained was mixed well and then homogenized for 12 min under the pressure of 800 bar with a high-pressure homogenizer sold by ATS Co. under the trade name AH-100D, and then removed the solvent under the condition of inlet temperature of 45°C, outlet temperature of 95°C, spray pressure of 20 kPa and inlet velocity of 0.09 L/h using a spray drying equipment sold by EYELA Co. under the trade name SD-1000, thus obtaining the solid nanodispersion of emamectin benzoate.

The solid nanodispersion of emamectin benzoate prepared in this example was dispersed in distilled water. It was measured using a laser granularity analyzer sold by Malvern Co. under the trade name Nano ZS90 and its average particle size was 87 nm. Its suspensibility was 99%, and wetting time was 23s.

### Example 17: Preparation of the pesticide solid nanodispersion of the present invention

The procedures of the example are as follows:
90.0 parts by weight of prochloraz fungicide was dissolved in chloroform. Subsequently, an aqueous solution of 3.5 parts by weight of didodecyl ether phosphate salt, 1.5 parts by weight of sodium dodecylbenzenesulfonate anionic surfactant and 5.0 parts by weight of sucrose water-soluble carrier was added into the resulting solution. The mixture thus obtained was mixed well and then sheared for 18 min at a shearing speed of 10000 rpm with a high-speed shear emulsifying machine sold by ATS Co. under the trade name C25, then removed the solvent at 30°C using a rotary evaporation equipment sold by EYELA Co. under the trade name N-2100, thus obtaining a prochloraz solid nanodispersion.

The prochloraz solid nanodispersion prepared in this example was dispersed in distilled water. It was measured using a laser granularity analyzer sold by Malvern Co. under the trade name Nano ZS90 and its average particle size was 550 nm. Its suspensibility was 97.5%, and wetting time was 42s.

### Example 18: Preparation of the pesticide solid nanodispersion of the present invention

The procedures of the example are as follows:
0.05 parts by weight of thifluzamide fungicide was dissolved in chloroform. Subsequently, 0.05 parts by weight of oleyl biuret amphoteric surfactant and 99.9 parts by weight of the mixture of urea and sodium sulphate (weight ratio of 3:1) were added into the resulting solution. The mixture thus obtained was mixed well at a rotation speed of 4200 rpm, and then removed the solvent at 30°C using a rotary evaporation equipment sold by EYELA Co. under the trade name N-2100, thus obtaining a thifluzamide solid nanodispersion.

The thifluzamide solid nanodispersion prepared in this example was dispersed in distilled water. It was measured using a laser granularity analyzer sold by Malvern Co. under the trade name Nano ZS90 and its average particle size was 620 nm. Its suspensibility was 97%, and wetting time was 48s.

### Example 19: Preparation of the pesticide solid nanodispersion of the present invention

The procedures of the example are as follows:
65 parts by weight of diclofop-methyl herbicide was dissolved in acetone. Subsequently, 11.0 parts by weight of octadecyl dihydroxyethyl amine oxide amphoteric surfactant, 12.0 parts by weight of magnesium sulphate and 12.0 parts by weight of magnesium aluminum silicate were added into the resulting solution. The mixture thus obtained was mixed well at a rotation speed of 5000 rpm, and then freeze-dried to remove the solvent under the condition of 10 pa using an apparatus sold by EYELA Co. under the trade name FD-81, thus obtaining a diclofop-methyl solid nanodispersion.

The diclofop-methyl solid nanodispersion prepared in this example was dispersed in distilled water. It was measured using a laser granularity analyzer sold by Malvern Co. under the trade name Nano ZS90 and its average particle size was 190 nm. Its suspensibility was 98%, and wetting time was 38s.

### Example 20: Preparation of the pesticide solid nanodispersion of the present invention

The procedures of the example are as follows:
20 parts by weight of amidosulfuron herbicide was dissolved in methanol. Subsequently, 50 parts by weight of oleyl biuret amphoteric surfactant, 25 parts by weight of the mixture of urea and sodium sulphate (weight ratio of 3:1) and 5 parts by weight of aqueous solution of the mixture of polyethylene glycol and magnesium aluminum silicate (weight ratio 3:5) were added into the resulting solution. The mixture thus obtained was sheared for 8 min at a shearing speed of 10000 rpm using a high-speed shear emulsifying machine sold by ATS Co. under the trade name C25, and then freeze-dried to remove the solvent under the condition of 10 pa using an apparatus sold by EYELA Co. under the trade name FD-81, thus obtaining a amidosulfuron solid nanodispersion.

The amidosulfuron solid nanodispersion prepared in this example was dispersed in distilled water. It was measured using a laser granularity analyzer sold by Malvern Co. under the trade name Nano ZS90 and its average particle size was 220 nm. Its suspensibility was 98%, and wetting time was 33s.

### Example 21: Preparation of the pesticide solid nanodispersion of the present invention

The procedures of the example are as follows:
0.001 parts by weight of benzylaminopurine plant growth regulator was dissolved in methanol. Subsequently, an aqueous solution of 25 parts by weight of cremophorel nonionic surfactant, 25 parts by weight of lauryl betaine amphoteric surfactants, 30 parts by weight of the mixture of urea and sucrose (weight ratio 1:1) and 19.999 parts by weight of polyethylene glycol water-soluble carrier was added into the resulting solution. The mixture thus obtained was mixed well at a rotation speed of 4200 rpm, and then removed the solvent under the condition of inlet temperature of 120°C, outlet temperature of 95°C, spray pressure of 20 kPa and inlet velocity of 0.1 L/h using a spray drying equipment sold by EYELA Co. under the trade name SD-1000, thus obtaining the solid nanodispersion of benzylaminopurine.

The solid nanodispersion of benzylaminopurine prepared in this example was dispersed in distilled water. It was measured using a laser granularity analyzer sold by Malvern Co. under the trade name Nano ZS90 and its average particle size was 85 nm. Its suspensibility was 99%, and wetting time was 22s.

### Example 22: Preparation of the pesticide solid nanodispersion of the present invention

The procedures of the example are as follows:
42.0 parts by weight of pyripropanol plant growth regulator was dissolved in chloroform. Subsequently, an aqueous solution of 0.001 parts by weight of aliphatic alcohol polyoxyethylene ether carboxylate anionic surfactant, 57.999 parts by weight of sucrose water-soluble carrier was added into the resulting solution. The mixture thus obtained was sheared for 15 min at a shearing speed of 10000 rpm with a high-speed shear emulsifying machine sold by ATS Co. under the trade name C25, thus obtaining a pyripropanol solid nanodispersion.

The pyripropanol solid nanodispersion prepared in this example was dispersed in distilled water. It was measured using a laser granularity analyzer sold by Malvern Co. under the trade name Nano ZS90 and its average particle size was 250 nm. Its suspensibility was 98%, and wetting time was 32s.

### Example 23: Preparation of the pesticide solid nanodispersion of the present invention

The procedures of the example are as follows:
A. Preparation of a nanodispersion solution
   10 parts by weight of lambda-cyhalothrin insecticide and 5 parts by weight of spinosad insecticide were heated to 90°C and poured into water. Then lambda-cyhalothrin and spinosad were uniformly dispersed in water by shearing for 20 min at shearing speed of 10000 rpm with a high-speed shear emulsifying machine sold by ATS Co. under the trade name C25, subsequently cooled to room temperature, thus obtaining a dispersion solution containing the above insecticide solid nanoparticles; and
B. Preparation of solid nanodispersion
   15.0 parts by weight of dodecanesulfonic acid sodium, 15.0 parts by weight of polycarboxylate anionic surfactant and 45 parts by weight of urea were added into the dispersion solution obtained in step A. The mixture was stirred well at a rotation speed of 1000 rpm, and then freeze-dried under the condition of 5 pa to remove the water using an apparatus sold by EYELA Co. under the trade name FD-81, thus preparing the said lambda-cyhalothrin-spinosad solid nanodispersion.

The lambda-cyhalothrin-spinosad solid nanodispersion prepared in this example was dispersed in distilled water. It was measured using a laser granularity analyzer sold by Malvern Co. under the trade name Nano ZS90 and its average particle size was 175 nm. Its suspensibility was 99%, and wetting time was 35s.

### Example 24: Preparation of the pesticide solid nanodispersion of the present invention

The procedures of the example are as follows:
A. Preparation of a nanodispersion solution
   30 parts by weight of spinosad insecticide and 30 parts by weight of trifluralin herbicide were heated to 90°C and poured into water. Then spinosad and trifluralin were uniformly dispersed in water by homogenizing for 20 min under the pressure of 1200 bar with a high-pressure homogenizer sold by ATS Co. under the trade name AH-100D, subsequently cooled to room temperature, thus obtaining a dispersion solution of spinosad and trifluralin solid nanoparticles; and
B. Preparation of solid nanodispersion
   10.0 parts by weight of dodecanesulfonic acid sodium, 5.0 parts by weight of polycarboxylate anionic surfactant and 22 parts by weight of urea water-soluble carrier were added into the dispersion solution of solid nanoparticles obtained in step A. The mixture was stirred well at a rotation speed of 1200 rpm, then removed the water under the condition of inlet temperature of 120°C, outlet temperature of 95°C, spray pressure of 20 kPa and inlet velocity of 0.1 L/h using a spray drying equipment sold by EYELA Co. under the trade name SD-1000, thus obtaining the said spinosad-trifluralin solid nanodispersion.

The spinosad-trifluralin solid nanodispersion prepared in this example was dispersed in distilled water. It was measured using a laser granularity analyzer sold by Malvern Co. under the trade name Nano ZS90 and its average particle size was 320 nm. Its suspensibility was 98.7%, and wetting time was 43s.

### Example 25: Preparation of the pesticide solid nanodispersion of the present invention

The procedures of the example are as follows:
A. Preparation of a nanodispersion solution
   6 parts by weight of propamocarb hydrochloride fungicide and 24 parts by weight of alachlor herbicide were heated to 65°C and poured into water. The said propamocarb hydrochloride and alachlor were uniformly dispersed in water by homogenizing for 20 min under the pressure of 1000 bar with a high-pressure homogenizer sold by ATS Co. under the trade name AH-100D, subsequently cooled to room temperature, thus obtaining a dispersion solution containing the above fungicide and herbicide solid nanoparticles; and
B. Preparation of solid nanodispersion
   12.0 parts by weight of dodecanesulfonic acid sodium anionic surfactant, 8.0 parts by weight of cumenyl phenol polyoxyethylene ether formaldehyde condensate nonionic surfactant and 50 parts by weight of the mixture of urea and sodium sulphate (weight ratio of 1:1) were added into the dispersion solution of solid nanoparticles obtained in step A. The resulting mixture was stirred well at a rotation speed of 1000 rpm, and then freeze-dried under the condition of 5 pa with a freeze drying apparatus sold by EYELA Co. under the trade name FD-81, thus preparing the said solid nanodispersion of propamocarb hydrochloride·alachlor.

The solid nanodispersion of propamocarb hydrochloride·alachlor prepared in this example was dispersed in distilled water. It was measured using a laser granularity analyzer sold by Malvern Co. under the trade name Nano ZS90 and its average particle size was 255 nm. Its suspensibility was 98.2%, and wetting time was 29s.

### Example 26: Preparation of the pesticide solid nanodispersion of the present invention

The procedures of the example are as follows:
A. Preparation of a nanodispersion solution
   27.0 parts by weight of deltamethrin insecticide and 20 parts by weight of simeconazole fungicide were heated to 120°C and poured into octane. Then deltamethrin and simeconazole were uniformly dispersed in octane by shearing for 15 min at shearing speed of 15000 rpm with a high-speed shear emulsifying machine sold by ATS Co. under the trade name C25, subsequently cooled to room temperature, thus obtaining a dispersion solution containing the above insecticide and fungicide solid nanoparticles; and
B. Preparation of solid nanodispersion
   13.0 parts by weight of octadecyl dihydroxyethyl amine oxide amphoteric surfactant, 32 parts by weight of magnesium sulphate and 8 parts by weight of magnesium aluminum silicate water-soluble carriers were added into the dispersion solution of solid nanoparticles obtained in step A. The resulting mixture was stirred well at a rotation speed of 4000 rpm, and then distilled to remove the solvent under the condition of 150°C with a distillation equipment sold by Kaifeng Hongxing Co. under the trade name S212, thus obtaining the said solid nanodispersion of deltamethrin·simeconazole.

The deltamethrin·simeconazole solid nanodispersion prepared in this example was dispersed in distilled water. It was measured using a laser granularity analyzer sold by Malvern Co. under the trade name Nano ZS90 and its average particle size was 172 nm. Its suspensibility was 98.5%, and wetting time was 34s.

### Example 27: Preparation of the pesticide solid nanodispersion of the present invention

The procedures of the example are as follows:
18 parts by weight of lambda-cyhalothrin insecticide and 18 parts by weight of avermectin insecticide were dissolved in acetone. Subsequently, an aqueous solution of 15 parts by weight of maleic rosin-polyoxypropylene-polyoxyethylene ether sulfonate anionic surfactant, 15 parts by weight of cumenyl phenol polyoxyethylene ether formaldehyde condensate nonionic surfactant and 34 parts by weight of sucrose water-soluble carrier was added into the resulting solution. The mixture thus obtained was sheared for 15 min at a shearing speed of 10000 rpm using a high-speed shear emulsifying machine sold by ATS Co. under the trade name C25, and then freeze-dried to remove the solvent under the condition of 5 pa using an apparatus sold by EYELA Co. under the trade name FD-81, thus obtaining a solid nanodispersion of lambda-cyhalothrin-avermectin.

The solid nanodispersion of lambda-cyhalothrin·avermectin prepared in this example was dispersed in distilled water. It was measured using a laser granularity analyzer sold by Malvern Co. under the trade name Nano ZS90 and its average particle size was 67 nm. Its suspensibility was 99.5%, and wetting time was 21s.

## Claims

1. A preparation method for a pesticide solid nanodispersion **characterized in that** it is formed by uniformly dispersing poorly water-soluble pesticide nanoparticles in surfactants and water-soluble carriers, and it has the composition in parts by weight as follows:
| | |
|---|---|
| pesticide | 0.001-90; |
| surfactants | 0.001-50; |
| water-soluble carriers | 5-99.9; |
wherein,
the said pesticide is one or more pesticide(s) selected from poorly water-soluble insecticides, fungicides, herbicides or plant growth regulators with solubility in water less than or equal 0.1 g/L;
the average particle size of the said pesticide nanoparticles is 1-1000 nm comprising the following steps:
A. Preparing the nanodispersion solution
Heating 0.001 to 90 parts by weight of the pesticide to the temperature above its melting point while below its decomposition and denaturation temperature, subsequently pouring the said pesticide into the water, then dispersing the said pesticide uniformly in water using a high-speed shear emulsifying machine or a high-pressure homogenizer, subsequently cooling it to room temperature to obtain the dispersion solution of the pesticide solid nanoparticles; and
B. Preparing the solid nanodispersion
Adding 0.001 to 50 parts by weight of surfactants and 5 to 99.9 parts by weight of water-soluble carriers to the dispersion solution of the pesticide solid nanoparticles obtained in step A, stirring, and then removing water by heating, decompression evaporation, vacuum drying or freeze drying, thus obtaining the said pesticide solid nanodispersion;
or
A. Preparing the nanodispersion solution
Heating 0.001 to 90 parts by weight of the pesticide to the temperature above its melting point, subsequently pouring it into a poor solvent of the said pesticide in which the solubility of the pesticide is less than or equal to 5%, then dispersing the said pesticide uniformly in the poor solvent using a high-speed shear emulsifying machine or a high-pressure homogenizer, subsequently cooling it to room temperature to obtain the dispersion solution of the pesticide solid nanoparticles; and
B. Preparing the solid nanodispersion
Adding 0.001 to 50 parts by weight of surfactants and 5 to 99.9 parts by weight of water-soluble carriers to the dispersion solution of the pesticide solid nanoparticles obtained in step A, stirring, and then removing the poor solvent and water by freeze drying, spray drying, centrifugation or distillation, thus obtaining the said pesticide solid nanodispersion.

2. The preparation method for a pesticide solid nanodispersion according to claim 1, **characterized in that** the said insecticide is selected from pyrethrins, carbamates, organophosphorus, organic sulfurs, organic cholines, nereistoxin, neonicotines, phenyl ureide, abamectin, pyridaben, acequinocyl, phenylpyrazole, indoxacarb or diafenthiuron;
The said fungicide is selected from aniline pyridine, antibiotics, aromatic hydrocarbons, dinitroaniline, allylamine, benzsulfamide, benzimidazole, benzisothiazole, benzophenone, benzopyrimidine, benzotriazine, benzyl carbamate,
carbamate, carboxamide, carboxylic acid diamide, chloronitrile, cyanoimidazole, cyclopropanecarboxamide, ethylaminothiazole carboxamide, imidazole, hydroxyanilide, imidazolidinone, isobenzofuranone, methoxyacrylate, methoxy carbamate, morpholine, N-phenylcarbamate, oxazolidinedione, phenyl acetamide, phenylamide, phenylpyrrole, phenylurea, thiophosphates, phthalamic acid, phthalimide, piperazine, piperidine, propionamide, pyridine, pyridylmethyl amide, toluamide, triazines or triazoles;
The said herbicide is selected from amides, aryloxyphenoxy propionates, phenoxy carboxylic acids, organophosphorus, benzamide, benzofuran, benzoic acid, benzothiadiazinone, carbamate, chloroacetamide, pyridine carboxylic acid, chlorocarboxylic acid, cyclohexanedione, dinitroanilines, diphenyl ether, isoxazole, oxazolidinone, N-phenyl phthalimide, oxadiazole, oxazolidinedione, oxyacetamide, phenylcarbamate, phenyl pyridazine, sulfonaminocarboxyl triazolinone, sulfonyl triazolo carboxamide, triazolopyrimidine, triones, uracil or ureas;
The said plant growth regulator is selected from maleic hydrazide, methyl naphthacetate, 6-benzylaminopurine, brassinolide, aminoethoxyvinylglycine or paclobutrazol.

3. The preparation method for a pesticide solid nanodispersion according to claim 1, **characterized in that** the said surfactant is one or more surfactant(s) selected from cationic surfactants, anionic surfactants, nonionic surfactants or amphoteric surfactants;
The said cationic surfactant is selected from aliphatic amine salts, ethanolamine salts, polyethylene polyamine salts or quaternary ammonium salts;
The said anionic surfactant is selected from sodium dodecyl sulfonate, sodium lauryl sulfate, sodium dodecylbenzenesulfonate, maleic rosin-polyoxypropylene-polyoxyethylene ether sulfonate, alkyl phenol polyoxyethylene ether phosphate salts, monododecyl ether phosphate salt, didodecyl ether phosphate salt, octyl ether phosphate, aliphatic alcohol polyoxyethylene phosphatidates, aliphatic alcohol polyoxyethylene ether carboxylates, polycarboxylates or lignosulfonates;
The said nonionic surfactant is selected from alkylphenol polyoxyethylene ether formaldehyde condensates, styrylphenol polyoxyethylene ether formaldehyde condensate, polystyrene phenol polyoxyethylene ether, cumenyl phenol polyoxyethylene ether formaldehyde condensate, benzylphenol polyoxyethylene ether formaldehyde condensate, polyoxyethylene castor oil, polyvinyl pyrrolidone, Tween, sorbitan oleate, polyoxyethylene-polyoxypropylene block copolymer or sucrose monooleate;
The said amphoteric surfactant is selected from dodecylhydroxypropyl sulfobetaine, lauryl betaine, octadecyl dihydroxyethyl amine oxide, octadecyl urea or oleyl biuret.

4. The preparation method for a pesticide solid nanodispersion according to claim 1, **characterized in that** the said water-soluble carrier is selected from urea, sodium sulfate, magnesium sulfate, sodium benzoate, sucrose, lactose, soluble starch, hydroxypropyl methyl cellulose, hydroxyethyl cellulose, sodium carboxymethyl cellulose, hydroxyethyl-p-cyclodextrin, hydroxypropyl-p-cyclodextrin, sulfo-p-cyclodextrin, polyvinyl alcohol, polyethylene glycol, xanthan gum, magnesium aluminum silicate, acacia, sodium acrylate or polyvinylpyrrolidone.

5. The preparation method for a pesticide solid nanodispersion according to claim 1, **characterized in that** the shearing speed of the said high-speed shear emulsifying machine is 1000-30000 rpm, the pressure of the said high-pressure homogenizer is 50-1500 bar and the said stirring speed is 50-5000 rpm.

## Patentansprüche

1. Herstellungsverfahren für eine feste Pestizid-Nanodispersion, **dadurch gekennzeichnet, dass** sie durch gleichmäßiges Verteilen schwer wasserlöslicher Pestizid-Nanopartikel in Tensiden und wasserlöslichen Trägern gebildet wird und die Zusammensetzung in Gewichtsteilen wie folgt lautet:
| | |
|---|---|
| Pestizid | 0,001 bis 90; |
| Tenside | 0,001 bis 50; |
| wasserlösliche Träger | 5 bis 99,9; |
wobei
es sich bei dem Pestizid um ein oder mehrere Pestizide, ausgewählt aus schwer wasserlöslichen Insektiziden, Fungiziden, Herbiziden oder Pflanzenwachstumsregulatoren, mit einer Wasserlöslichkeit von weniger als oder gleich 0,1 g/l handelt;
die durchschnittliche Partikelgröße der Pestizid-Nanopartikel 1 bis 1000 nm beträgt; umfassend die folgenden Schritte:
A.Herstellen der Nanodispersionslösung
Erwärmen von 0,001 bis 90 Gewichtsteilen des Pestizids auf die Temperatur über seinem Schmelzpunkt, aber unter seiner Zersetzungs- und Denaturierungstemperatur, anschließendes Gießen des Pestizids in das Wasser, anschließendes gleichmäßiges Dispergieren des Pestizids in Wasser unter Verwendung einer Hochgeschwindigkeits-Scheremulgiermaschine oder eines Hochdruckhomogenisators, anschließendes Abkühlen auf Raumtemperatur, um die Dispersionslösung der festen Pestizid-Nanopartikel zu erhalten; und
B.Herstellen der festen Nanodispersion
Zugeben von 0,001 bis 50 Gewichtsteilen von Tensiden und 5 bis 99,9 Gewichtsteilen von wasserlöslichen Trägern zu der Dispersionslösung der in Schritt A erhaltenen festen Pestizid-Nanopartikel, Rühren und anschließendes Entfernen von Wasser durch Erhitzen, Dekompressionsverdampfen, Vakuumtrocknen oder Gefriertrocknen, wodurch die feste Pestizid-Nanodispersion erhalten wird;
oder
A.Herstellen der Nanodispersionslösung
Erwärmen von 0,001 bis 90 Gewichtsteilen des Pestizids auf die Temperatur über seinem Schmelzpunkt, anschließend Gießen in ein schlechtes Lösungsmittel des Pestizids, in dem die Löslichkeit des Pestizids weniger als oder gleich 5 % beträgt, dann gleichmäßiges Dispergieren des Pestizids in dem schlechten Lösungsmittel unter Verwendung einer Hochgeschwindigkeits-Scheremulgiermaschine oder eines Hochdruckhomogenisators, anschließend Abkühlen auf Raumtemperatur, um die Dispersionslösung der festen Pestizid-Nanopartikel zu erhalten; und
B.Herstellen der festen Nanodispersion
Zugeben von 0,001 bis 50 Gewichtsteilen von Tensiden und 5 bis 99,9 Gewichtsteilen von wasserlöslichen Trägern zu der Dispersionslösung der in Schritt A erhaltenen festen Pestizid-Nanopartikel, Rühren und anschließendes Entfernen des schlechten Lösungsmittels und des Wassers durch Gefriertrocknen, Sprühtrocknen, Zentrifugieren oder Destillieren, wodurch die feste Pestizid-Nanodispersion erhalten wird.

2. Herstellungsverfahren für eine feste Pestizid-Nanodispersion nach Anspruch 1, **dadurch gekennzeichnet, dass** das Insektizid aus Pyrethrinen, Carbamaten, Organophosphor, organischen Schwefeln, organischen Cholinen, Nereistoxin, Neonicotinen, Phenylureid, Abamectin, Pyridaben, Acequinocyl, Phenylpyrazol, Indoxacarbon oder Diafenthiuron ausgewählt ist;
das Fungizid aus Anilinpyridin, Antibiotika, aromatischen Kohlenwasserstoffen, Dinitroanilin, Allylamin, Benzsulfamid, Benzimidazol, Benzisothiazol, Benzophenon, Benzopyrimidin, Benzotriazin, Benzylcarbamat, Carbamat, Carboxamid, Carbonsäurediamid, Chlornitril, Cyanoimidazol, Cyclopropancarboxamid, Ethylaminothiazolcarboxamid, Imidazol, Hydroxyanilid, Imidazolidinon, Isobenzofuranon, Methoxyacrylat, Methoxycarbamat, Morpholin, N-Phenylcarbamat, Oxazolidindion,
Phenylacetamid, Phenylamid, Phenylpyrrol, Phenylharnstoff, Thiophosphaten, Phthalaminsäure, Phthalimid, Piperazin, Piperidin, Propionamid, Pyridin, Pyridylmethylamid, Toluamid, Triazinen oder Triazolen ausgewählt ist;
das Herbizid aus Amiden, Aryloxyphenoxypropionaten, Phenoxycarbonsäuren, Organophosphor, Benzamid, Benzofuran, Benzoesäure, Benzothiadiazinon, Carbamat, Chloracetamid, Pyridincarbonsäure, Chlorcarbonsäure, Cyclohexandion, Dinitroanilinen, Diphenylether, Isoxazol, Oxazolidinon, N-Phenylphthalamid, Oxadiazol, Oxazolidindion, Oxyacetamid, Phenylcarbamat, Phenylpyridazin, Sulfonaminocarboxyltriazolinon, Sulfonyltriazolocarboxamid, Triazolopyrimidin, Trionen, Uracil oder Harnstoffen ausgewählt ist;
der Pflanzenwachstumsregulator aus Maleinsäurehydrazid, Methylnaphthacetat, 6-Benzylaminopurin, Brassinolid, Aminoethoxyvinylglycin oder Paclobutrazol ausgewählt ist.

3. Herstellungsverfahren für eine feste Pestizid-Nanodispersion nach Anspruch 1, **dadurch gekennzeichnet, dass** das es sich bei dem Tensid um ein oder mehrere Tenside handelt, die aus kationischen Tensiden, anionischen Tensiden, nichtionischen Tensiden oder amphoteren Tensiden ausgewählt sind;
wobei das kationische Tensid aus aliphatischen Aminsalzen, Ethanolaminsalzen, Polyethylenpolyaminsalzen oder quaternären Ammoniumsalzen ausgewählt ist;
wobei das anionische Tensid aus Natriumdodecylsulfonat, Natriumlaurylsulfat, Natriumdodecylbenzolsulfonat, Maleinsäurekolophonium-Polyoxypropylen-Polyoxyethylenethersulfonat, Alkylphenolpolyoxyethylenetherphosphatsalzen, Monododecyletherphosphatsalz, Didodecyletherphosphatsalz, Aliphatischer-Alkohol-Polyoxyethylenphosphatidaten, Aliphatischer-Alkohol-Polyoxyethylenethercarboxylaten, Polycarboxylaten oder Lignosulfonaten ausgewählt ist;
wobei das nichtionische Tensid aus Alkylphenolpolyoxyethylenetherformaldehydkondensaten, Styrylphenolpolyoxyethylenetherformaldehydkondensat, Polystyrolphenolpolyoxyethylenether, Cumenylphenolpolyoxyethylenetherformaldehydkondensat, Benzylphenolpolyoxyethylenetherformaldehydkondensat, Polyoxyethylenrizinusöl, Polyvinylpyrrolidon, Tween, Sobitanoleat, Polyoxyethylen-Polyoxypropylen-Blockcopolymer oder Saccharosemonooleat ausgewählt ist;
wobei das amphotere Tensid aus Dodecylhydroxypropylsulfobetain, Laurylbetain, Octadecyldihydroxyethylaminoxid, Octadecylharnstoff oder Oleylbiuret ausgewählt ist.

4. Herstellungsverfahren für eine feste Pestizid-Nanodispersion nach Anspruch 1, **dadurch gekennzeichnet, dass** der wasserlösliche Träger aus Harnstoff, Natriumsulfat, Magnesiumsulfat, Natriumbenzoat, Saccharose, Lactose, löslicher Stärke, Hydroxypropylmethylcellulose, Hydroxyethylcellulose, Natriumcarboxymethylcellulose. Hydroxyethyl-D- cyclodextrin, Hydroxypropyl-D-cyclodextrin, Sulfo-D-cyclodextrin, Polyvinylalkohol, Polyethylenglykol, Xanthangummi, Magnesiumaluminiumsilikat, Akazie, Natriumacrylat oder Polyvinylpyrrolidon ausgewählt ist.

5. Herstellungsverfahren für eine feste Pestizid-Nanodispersion nach Anspruch 1, **dadurch gekennzeichnet, dass** die Schergeschwindigkeit der Hochgeschwindigkeits-Scheremulgiermaschine 1000 bis 30000 U/min beträgt, der Druck des Hochdruckhomogenisators 50 bis 1500 bar beträgt und die Rührgeschwindigkeit 50 bis 5000 U/min beträgt.

## Revendications

1. Procédé de préparation d'une nano-dispersion solide de pesticide **caractérisé en ce qu'**elle est formée par la dispersion uniforme de nanoparticules pesticides faiblement hydrosolubles dans des tensioactifs et des excipients hydrosolubles, et elle possède la composition en partie en poids comme suit :
| | |
|---|---|
| Pesticide | 0,001 - 90 ; |
| Tensioactifs | 0,001 - 50 ; |
| excipients hydrosolubles | 5 - 99,9 ; |
dans lequel,
ledit pesticide est au moins un pesticide choisi à partir d'insecticides, de fongicides, d'herbicides ou de régulateurs de la croissance végétale faiblement hydrosolubles ayant une solubilité dans l'eau inférieure ou égale à 0,1 g/L ;
la taille de particule moyenne desdites nanoparticules de pesticide est comprise entre 1 et 1 000 nm comprenant les étapes suivantes :
A.Préparation de la solution de nano-dispersion
Le chauffage de 0,001 à 90 parties en poids du pesticide à une température supérieure à son point de fusion tout en étant inférieure à sa température de décomposition et de dénaturation, le versement ultérieur dudit pesticide dans l'eau, ensuite la dispersion dudit pesticide de manière uniforme dans l'eau en utilisant une machine d'émulsion par cisaillement à vitesse élevée ou un dispositif d'homogénéisation par pression élevée, ensuite son refroidissement à température ambiante afin d'obtenir la solution de dispersion des nanoparticules solides de pesticide ; et
B.Préparation de la nano-dispersion solide
L'ajout de 0,001 à 50 parties en poids de tensioactifs et de 5 à 99,9 parties en poids d'excipients hydrosolubles à la solution de dispersion des nanoparticules solides de pesticide obtenues dans l'étape A, l'agitation et ensuite l'élimination d'eau par chauffage, l'évaporation par décompression, le séchage sous vide ou la lyophilisation permettant ainsi d'obtenir ladite nano-dispersion solide de pesticide ;
ou
A.Préparation de la solution de nano-dispersion
Le chauffage de 0,001 à 90 parties en poids du pesticide à une température supérieure à son point de fusion, le versement ultérieur dudit pesticide dans un solvant pauvre dudit pesticide dans lequel la solubilité du pesticide est inférieure ou égale à 5 %, ensuite la dispersion dudit pesticide de manière uniforme dans le solvant pauvre en utilisant une machine d'émulsion par cisaillement à vitesse élevée ou un dispositif d'homogénéisation par pression élevée, ensuite son refroidissement à température ambiante afin d'obtenir la solution de dispersion des nanoparticules solides de pesticide ; et
B.Préparation de la nano-dispersion solide
L'ajout de 0,001 à 50 parties en poids de tensioactifs et de 5 à 99,9 parties en poids d'excipients hydrosolubles à la solution de dispersion des nanoparticules solides de pesticide obtenues dans l'étape A, l'agitation et ensuite l'élimination du solvant pauvre par lyophilisation, le séchage par pulvérisation, la centrifugation ou la distillation, permettant ainsi d'obtenir ladite nano-dispersion solide de pesticide.

2. Procédé de préparation d'une nano-dispersion solide de pesticide selon la revendication 1, **caractérisé en ce que** ledit insecticide est choisi parmi les pyréthrines, les carbamates, les organo-phosphorés, les soufres organique, les cholines organiques, la néréistoxine, les néonicotines, l'uréide de phényle, l'abamectine, le pyridabène, l'acéquinocyle, le phénylpyrazole, l'indoxacarb ou le diafenthiuron ;
Ledit fongicide est choisi parmi la pyridine, les antibiotiques, les hydrocarbures aromatiques, la dinitroaniline, l'allylamine, le benzsulfamide, le benzimidazole, le benzisothiazole, la benzophénone, la benzopyrimidine, le benzotriazine, le carbamate de benzyle, le carbamate, le carboxamide, le diamide d'acide carboxylique, le chloronitrile, le cyanoimidazole, le cyclopropanecarboxamide, le carboxamide d'éthylaminothiazole, l'imidazole, l'hydroxyanilide, l'imidazolidinone, l'isobenzofuranone, le méthoxyacrylate, le méthoxycarbamate, la morpholine, le N-phénylcarbamate, l'oxazolidinedione, l'éthamide de phényle, le phénylamide, le phénylpyrrole, la phénylurée, les thiophosphates, l'acide phtalamique, le phtalimide, la pipérazine, la pipéridine, le propionamide, la pyridine, l'amide de pyridylméthyle, le toluamide, les triazines ou les triazoles ;
Ledit herbicide et est choisi parmi les amides, les propionates d'aryloxyphénoxy, les acides phénoxy carboxyliques, les organo-phosphorés, le benzamide, le benzofurane, l'acide benzoïque, la benzothiadiazinone, le carbamate, le chloroéthamide, l'acide carboxylique de pyridine, l'acide chlorocarboxylique, la cyclohexanedione, les dinitroanilines, l'éther diphénylique, l'isoxazole, l'oxazolidinone, le N-phényl phtalimide, l'oxadiazole, l'oxazolidinedione, l'oxyéthamide, le phénylcarbamate, la phényl pyridazine, la triazolinone de sulfonaminocarboxyle, le triazolo carboxamide de sulfonyle, la triazolopyrimidine, les triones, l'uracile ou les urées ;
Ledit régulateur de croissance est choisi parmi l'hydrazide maléique, le naphtéthate de méthyle, la 6-benzylaminopurine, le brassinolide, l'aminoéthoxyvinylglycine ou le paclobutrazol.

3. Procédé de préparation d'une nano-dispersion solide de pesticide selon la revendication 1, **caractérisé en ce que** ledit tensioactif est au moins un tensioactif choisi parmi les tensioactifs cationiques, les tensioactifs anioniques, les tensioactifs non ioniques ou les tensioactifs amphotères ;
Ledit tensioactif cationique est choisi parmi les sels d'amines aliphatiques, les sels d'éthanolamine, les sels de polyamide polyéthylénique ou les sels d'ammonium quaternaire ;
Ledit tensioactif anionique est choisi parmi le dodécyl sulfonate de sodium, le lauryl sulfate de sodium, le dodécylbenzènesulfonate de sodium, le colophane maléique - polyoxypropylène - sulfonate d'éther de polyoxyéthylène, les sels de phosphate d'éther d'alkyl phénol polyoxyéthylène, le sel de phosphate d'éther monododécylique, le sel de phosphate d'éther didodécylique, le phosphate d'éther octylique, les phosphatidates de polyoxyéthylène d'alcool aliphatique, les carboxylates de polyoxyéthylène d'alcool aliphatique, les polycarboxylates ou les lignosulfonates ;
Ledit tensioactif non ionique est choisi parmi les condensats de formaldéhyde et d'éther de polyoxyéthylène alkylphénolique, les condensats de formaldéhyde et d'éther de polyoxyéthylène styrylphénolique, l'éther de polyoxyéthylène phénolique et de polystyrène, le condensat de formaldéhyde et d'éther de polyoxyéthylène cuménylphénolique, le condensat de formaldéhyde et d'éther de polyoxyéthylène benzylphénolique, l'huile de ricin polyoxyéthylénique, la polyvinyl pyrrolidone, le Tween, l'oléate de sorbitane, le polymère séquencé de polyoxyéthylène et de polyoxypropylène ou le monooléate de sucrose ;
Ledit amphotère est choisi parmi la dodécylhydroxypropyl sulfobétaïne, la lauryl bétaïne, l'oxyde d'octadécyl dihydroxyéthyl amine, l'octadécyl urée ou le biuret oléylique.

4. Procédé de préparation d'une nano-dispersion solide de pesticide selon la revendication 1, **caractérisé en ce que** ledit excipient hydrosoluble est choisi parmi l'urée, le sulfate de sodium, le sulfate de magnésium, le benzoate de sodium, le sucrose, le lactose, l'amidon soluble, l'hydroxypropyl méthyl cellulose, l'hydroxyéthyl cellulose, la carboxyméthyl cellulose sodée, l'hydroxyéthyl-β-cyclodextrine, l'hydroxypropyl-β-cyclodextrine, la sulfocyclodextrine, l'alcool polyvinylique, le glycol polyéthylènique, la gomme de xanthane, le silicate de magnésium et d'aluminium, l'acacia, l'acrylate de sodium ou la polyvinylpyrrolidone.

5. Procédé de préparation d'une nano-dispersion solide de pesticide selon la revendication 1, **caractérisé en ce que** la vitesse de cisaillement de la machine d'émulsion par cisaillement à vitesse élevée est comprise entre 1 000 et 30 000 tr/m, la pression dudit dispositif d'homogénéisation par pression élevée est comprise entre 50 et 1 500 bar et ladite vitesse d'agitation est comprise entre 50 et 5 000 tr/m.
